# EUROPEAN PATENT APPLICATION

(11) **EP 2 498 217 A1**
(43) Date of publication of application: **12.09.2012**
(21) Application number: 11824830.1
(22) Date of filing: 02.05.2011
(51) Int. Cl.: G06Q 50/00, G06K 17/00, G06Q 10/00, G06Q 30/00

(54) **PURCHASE SUPPORT SERVER, PURCHASE SUPPORT SYSTEM, PURCHASE SUPPORT METHOD, PURCHASE SUPPORT PROGRAM, AND COMPUTER READABLE RECORDING MEDIUM RECORDING PROGRAM**

(30) Priority: 14.09.2010 JP 2010206016
(71) Applicant: Rakuten, Inc., Tokyo 140-0002 (JP)
(72) Inventor: BANDARA Udana, Tokyo 140-0002 (JP)
(74) Representative: Price, Christopher
(86) International application number: PCT/JP2011/060544
(87) International publication number: WO 2012/035818

(57) **Abstract**

A mediation server includes a related information receiving means for receiving store-related information for identifying a store visited by a user (visited store) and item-related information for identifying an item recognized by the user in the visited store from a mobile terminal of the user, a storage means for storing item data, store data, price data indicating a price of an item in a store selling the item, and remuneration data indicating a remuneration amount to be paid from one store to another store when a user purchases in one store an item corresponding to the item recognized in another store, a generating means for generating presented information indicating a purchase cost when purchasing a presented item corresponding to the item-related information from a store selling the item by reference to the storage means based on the received item-related information and store-related information, and a presented information transmitting means for transmitting the presented information to the mobile terminal. When the selling store is different from the visited store, the remuneration amount to be paid from the selling store to the visited store is included in the purchase cost.

## Description

### Technical Field

The present invention relates to a purchase support server, a purchase support system, a purchase support method, a purchase support program, and a computer readable recording medium recording the program.

### Background Art

Various systems for supporting shopping of users are known. For example, Patent Literature 1 below discloses a shopping support system that supports users to make efficient shopping by taking the price of an item to be purchased and the transportation cost for shopping into account. Further, the mechanism that search for the same or similar items based on the photograph of an item taken by a camera-equipped mobile terminal and provides a search result to the terminal is known (see Non Patent Literatures 1 and 2 below). Thus, combining these techniques makes it possible to present an item corresponding to a photograph taken by a user in a visited store and the prices of the item in different stores, and thereby help the user to decide from which store to purchase the item.

### Citation List

### Patent Literature

PTL 1: JP 2009-48284 A

### Non Patent Literature

NPL 1: Masaki Masuda, "Amazon's Offial Apps with "Photo Search" Gaining Popularity", [online], June 7, 2010 [searched on August 24, 2010], Internet <URL: http://techwave.jp/archives/51461554.html>
NPL 2: "Free iPhone Apps Offered by Amazon, Including "Photo Search" using Camera", [online], June 18, 2010 [searched on August 24, 2010], Internet <URL: http://web-tan.forum.impressrd.jp/e/2010/06/18/8185>

### Summary of Invention

### Technical Problem

However, implementation of the above decision support raises the case where a user purchases an item which the user has photographed in a visited store (which is an actual store in the real world, also referred to as "real store" in this specification) from another store through online shopping. For example, there can be a case where a user purchases an item from another store that offers the lower price than the visited store through online shopping. In this case, the real store in which the item sold there has been photographed cannot gain any profit despite that its own item has been photographed (for example, it cannot even collect the item display cost) and is thus likely to get dissatisfied.

In view of the foregoing, it is desirable to distribute the profit not only to a purchase store but also to a visited store when a user purchases an item recognized in the visited store in another store.

### Solution to Problem

A purchase support server according to one aspect of the present invention includes a related information receiving means for receiving store-related information for identifying a store visited by a user as a visited store and item-related information for identifying an item recognized by the user in the store from a mobile terminal of the user, a storage means for storing item data related to an item, store data related to a store, price data indicating a price of an item in a store selling the item, and remuneration data indicating a remuneration amount to be paid from one store to another store when a user purchases in the one store an item corresponding to the item recognized in the another store, a generating means for generating presented information indicating a purchase cost when purchasing a presented item corresponding to the item-related information from a store selling the item by reference to the storage means based on the item-related information and the store-related information received by the related information receiving means, the purchase cost including the remuneration amount to be paid from the selling store to the visited store when the selling store is different from the visited store, and a presented information transmitting means for transmitting the presented information generated by the generating means to the mobile terminal.

A purchase support system according to one aspect of the present invention is a purchase support system including a mobile terminal of a user and a purchase support server capable of communication with the terminal, the mobile terminal including an acquiring means for acquiring store-related information for identifying a store visited by a user as a visited store and item-related information for identifying an item recognized by the user in the store, a related information transmitting means for transmitting the store-related information and the item-related information acquired by the acquiring means to the purchase support server, and a presented information receiving means for receiving presented information transmitted from the purchase support server in response to the store-related information and the item-related information transmitted by the related information transmitting means, and the purchase support server including a related information receiving means for receiving the store-related information and the item-related information transmitted by the related information transmitting means, a storage means for storing item data related to an item, store data related to a store, price data indicating a price of an item in a store selling the item, and remuneration data indicating a remuneration amount to be paid from one store to another store when a user purchases in the one store an item corresponding to the item recognized in the another store, a generating means for generating the presented information indicating a purchase cost when purchasing a presented item corresponding to the item-related information from a store selling the item by reference to the storage means based on the item-related information and the store-related information received by the related information receiving means, the purchase cost including the remuneration amount to be paid from the selling store to the visited store when the selling store is different from the visited store, and a presented information transmitting means for transmitting the presented information generated by the generating means to the mobile terminal.

A purchase support method according to one aspect of the present invention is a purchase support method executed by a purchase support server, the purchase support server including a storage means for storing item data related to an item, store data related to a store, price data indicating a price of an item in a store selling the item, and remuneration data indicating a remuneration amount to be paid from one store to another store when a user purchases in the one store an item corresponding to the item recognized in the another store, the method including a related information receiving step of receiving store-related information for identifying a store visited by a user as a visited store and item-related information for identifying an item recognized by the user in the store from a mobile terminal of the user, a generating step of generating presented information indicating a purchase cost when purchasing a presented item corresponding to the item-related information from a store selling the item by reference to the storage means based on the item-related information and the store-related information received in the related information receiving step, the purchase cost including the remuneration amount to be paid from the selling store to the visited store when the selling store is different from the visited store, and a presented information transmitting step of transmitting the presented information generated in the generating step to the mobile terminal.

A purchase support program according to one aspect of the present invention causes a computer to implement a related information receiving function that receives store-related information for identifying a store visited by a user as a visited store and item-related information for identifying an item recognized by the user in the store from a mobile terminal of the user, a storage means function that stores item data related to an item, store data related to a store, price data indicating a price of an item in a store selling the item, and remuneration data indicating a remuneration amount to be paid from one store to another store when a user purchases in the one store an item corresponding to the item recognized in the another store, a generating function that generates presented information indicating a purchase cost when purchasing a presented item corresponding to the item-related information from a store selling the item by reference to the storage means based on the item-related information and the store-related information received by the related information receiving function, the purchase cost including the remuneration amount to be paid from the selling store to the visited store when the selling store is different from the visited store, and a presented information transmitting function that transmits the presented information generated by the generating function to the mobile terminal.

A computer-readable recording medium according to one aspect of the present invention stores a purchase support program causing a computer to implement a related information receiving function that receives store-related information for identifying a store visited by a user as a visited store and item-related information for identifying an item recognized by the user in the store from a mobile terminal of the user, a storage means function that stores item data related to an item, store data related to a store, price data indicating a price of an item in a store selling the item, and remuneration data indicating a remuneration amount to be paid from one store to another store when a user purchases in the one store an item corresponding to the item recognized in the another store, a generating function that generates presented information indicating a purchase cost when purchasing a presented item corresponding to the item-related information from a store selling the item by reference to the storage means based on the item-related information and the store-related information received by the related information receiving function, the purchase cost including the remuneration amount to be paid from the selling store to the visited store when the selling store is different from the visited store, and a presented information transmitting function that transmits the presented information generated by the generating function to the mobile terminal.

According to the above aspect, the presented information about stores selling a presented item corresponding to an item recognized by a user and purchase costs is generated based on the item-related information and the store-related information received from the mobile terminal and transmitted to the mobile terminal. At the time of generating the presented information, when a store selling the item is not a visited store, the remuneration amount to be paid from that store to the visited store is included in the purchase cost. Accordingly, when a user purchases the item recognized in the visited store in another store, the remuneration for the purchase is paid to the visited store, so that the profit is distributed not only to the purchase store but also to the visited store.

In the purchase support server according to another aspect, the store-related information may be store IDentification information identifying a store, which is read by the mobile terminal from a barcode or an IC tag placed in the visited store. In this case, because the information identifying a store is transmitted from the mobile terminal to the purchase support server, the purchase support server can specify the visited store simply by using the information.

In the purchase support server according to another aspect, the store-related information may be position information indicating a position of the mobile terminal, which is acquired by a position acquiring means of the mobile terminal, and the generating means may specify a store located in the position indicated by the position information as the visited store based on the position information and the store data. In this manner, because the visited store is specified based on the position information acquired in the mobile terminal, the visited store can be specified without need to prepare information for identifying the store in the store.

In the purchase support server according to another aspect, the item-related information may be photographic data of an item, and the generating means may execute image recognition on the photographic data and specify an item indicated by the photographic data based on a result of the image recognition and the item data. In this case, a user can obtain the item-related information simply by taking a photograph of the item, which enhances the user-friendliness.

In the purchase support server according to another aspect, weights may be assigned to the remuneration amount based on attributes of one store or attributes of another store. The remuneration rate can be thereby set appropriately according to store attributes.

In the purchase support server according to another aspect, information about time to acquire the presented item may be included in the presented information, and when the selling store is different from the visited store, the purchase cost may further include a shipping charge of the presented item. By providing such additional information to a user, it is possible to support the user's item purchase in an elaborate manner.

In the purchase support server according to another aspect, when the selling store is the visited store, a link for performing a purchase procedure of the presented item in the visited store through a predetermined credit payment site may be embedded in the presented information corresponding to the visited store. In this manner, by providing a means for a credit card payment through a network at the time of purchasing a presented item in a visited store, it is possible to increase opportunities to purchase the item in the visited store.

### Advantageous Effects of Invention

According to one aspect of the present invention, when a user purchases an item recognized in a visited store in another store, the amount of remuneration to be paid from that store to the visited store is included in the purchase cost, and therefore the profit can be distributed not only to the purchase store but also to the visited store.

### Brief Description of Drawings

Fig. 1 is a diagram showing an overall configuration of a purchase support system according to an embodiment.
Fig. 2 is a block diagram showing a functional configuration of a mobile terminal shown in Fig. 1.
Fig. 3 is a diagram showing a display example of presented information in a mobile terminal.
Fig. 4 is a block diagram showing a functional configuration of a mediation server shown in Fig. 1.
Fig. 5 is a diagram showing a hardware configuration of the mediation server shown in Fig. 1.
Figs. 6(a)(b) are diagrams showing examples of price data.
Fig. 7 is a diagram showing an example of remuneration data.
Fig. 8 is a sequence chart showing an operation of the purchase support system shown in Fig. 1.
Fig. 9 is a diagram showing a configuration of a purchase support program according to an embodiment.

### Description of Embodiments

An embodiment of the present invention is described hereinafter in detail with reference to the appended drawings. In the description of the drawings, the same or equivalent elements are denoted by the same reference symbols, and the redundant explanation thereof is omitted.

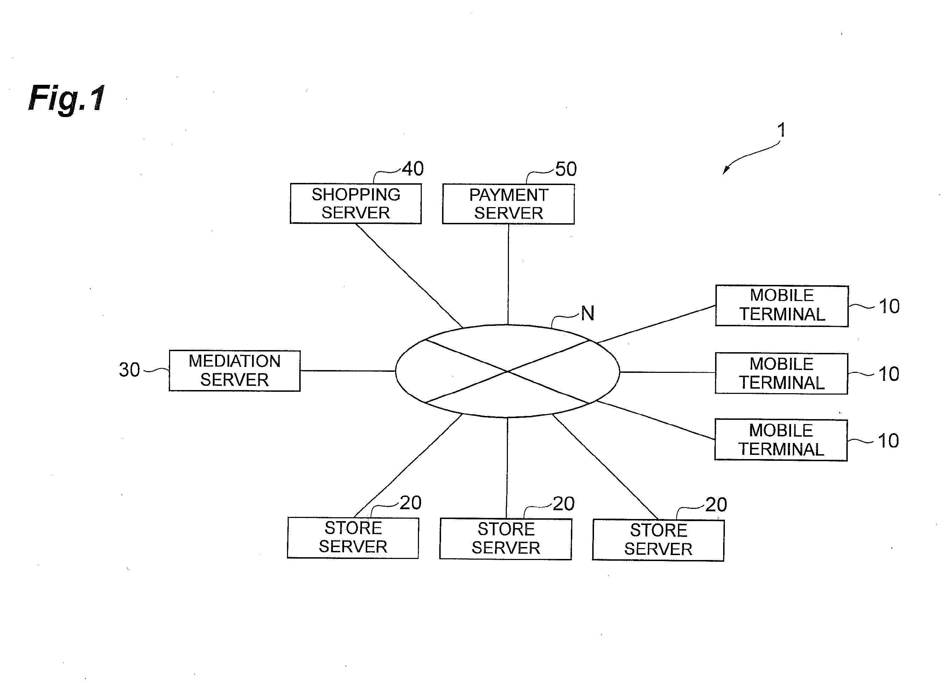

Functions and configurations of a purchase support system 1 according to an embodiment are described hereinafter with reference to Figs. 1 to 7. The purchase support system 1 is a computer system that presents information about a purchase-available item (at least information about an item, a store selling the item, and a purchase cost) in response to a request from a user who has visited a real store. The purchase support system 1 includes a mobile terminal 10 that is owned by a user, a store server 20, a mediation server (purchase support server) 30, a shopping server 40, and a payment server 50.

The store server 20 is a computer that is deployed in each store and manages information about the sales, stock and the like in the store. The store server 20 may be a personal computer. The mediation server 30 is a computer that searches for a purchase-available item in response to a request from the mobile terminal 10 and transmits a search result to the mobile terminal 10. The shopping server 40 is a computer that provides an electronic mall Web site (online shopping site) and stores information about the sales, stock and the like in each of stores of the electronic mall (each store may or may not have the store server 20). A user can purchase an item through the site provided by the shopping server 40. The payment server 50 is a computer that provides an online payment site, and a user can make a credit card payment through the payment site when purchasing an item in a real store.

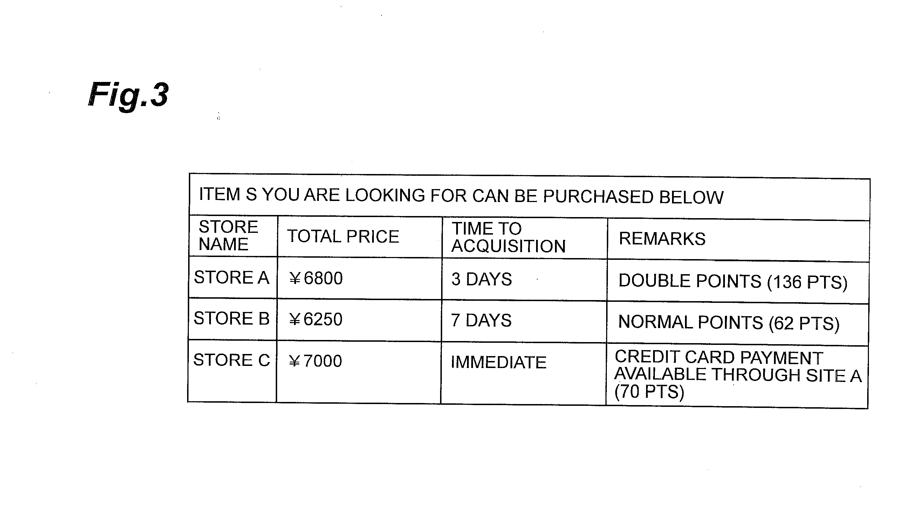

The mobile terminal 10, the store server 20, the mediation server 30, the shopping server 40 and the payment server 50 can communicate with one another through a communication network N that is the Internet, a wireless LAN, a mobile communication network or the like. Although three mobile terminals 10 and three store servers 20 are shown in Fig. 3, the number of those devices in the purchase support system 1 is arbitrary.

Note that an administrator (agent) that manages the mediation server 30, the shopping server 40 and the payment server 50 may be the same or different.

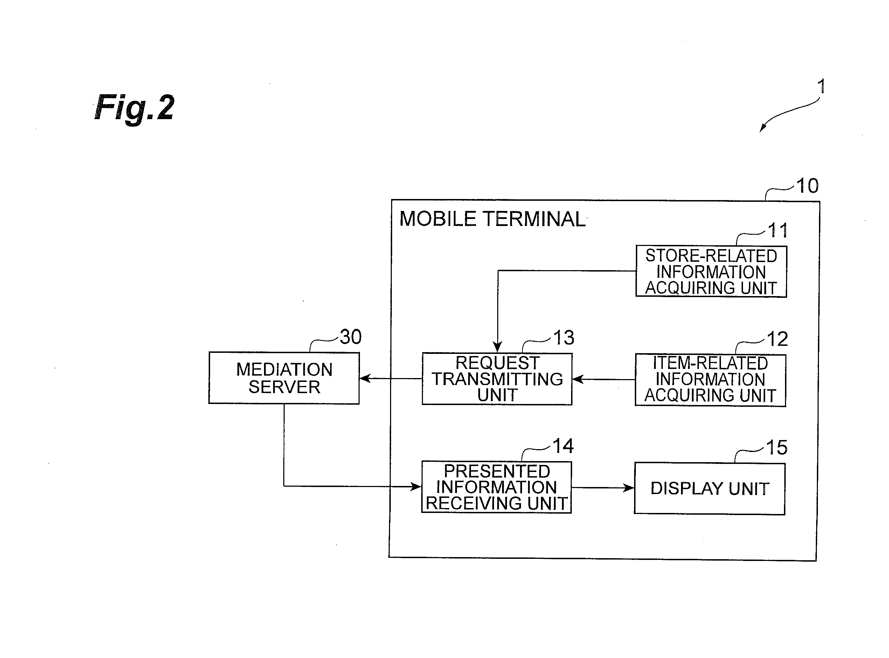

The mobile terminal 10 is described firstly. Referring to Fig. 2, the mobile terminal 10 includes a store-related information acquiring unit (acquiring means) 11, an item-related information acquiring unit (acquiring means) 12, a request transmitting unit (related information transmitting means) 13, a presented information receiving unit (presented information receiving means) 14, and a display unit 15 as functional elements. The mobile terminal 10 may be a sophisticated mobile phone (smartphone) or personal digital assistant (PDA) with a camera, for example, though the type of the mobile terminal 10 is not limited thereto.

The store-related information acquiring unit 11 is a means of acquiring store-related information to be used for identifying a real store (visited store) where a user has visited. The store-related information acquiring unit 11 acquires the information by the following method when user operation for acquiring store-related information is made.

For example, the store-related information acquiring unit 11 may acquire a store ID that is embedded in a barcode (for example, two-dimensional barcode) presented at a store as the store-related information. In this case, the store-related information acquiring unit 11 may be configured as a camera, barcode analysis program or the like. The store ID is information that uniquely identifies a store.

Further, the store-related information acquiring unit 11 may acquire a store ID that is stored in an IC tag placed at a store as the store-related information. In this case, the store-related information acquiring unit 11 may be configured as an RFID (Radio Frequency IDentification) tag reader or the like.

Furthermore, the store-related information acquiring unit 11 may be configured using a position acquiring means such as a GPS (Global Positioning System) receiver, and position information (latitude and longitude) indicating the position of the mobile terminal 10 may be used as the store-related information. In this case, it is necessary to specify a store corresponding to the position information on the mediation server 30 side.

In this embodiment, it is assumed that the store-related information acquiring unit 11 acquires a store ID. The store-related information acquiring unit 11 outputs the acquired store ID to the request transmitting unit 13.

The item-related information acquiring unit 12 is a means of acquiring item-related information to be used for identifying an item recognized by a user in a real store (visited store). Recognition of an item by a user means that the user actually sees the item and pays attention to (becomes interested in) it.

In this embodiment, it is assumed that the item-related information acquiring unit 12 acquires photographic data as the item-related information. When a user takes a photograph of an item with a camera incorporated in the mobile terminal 20, the item-related information acquiring unit 12 acquires the photographic data of the item and outputs it to the request transmitting unit 13. Note that the photograph may be any photograph as long as it allows an item to be identified by image recognition in the mediation server 30, and it may be a photograph of the entire item, a scale-up photograph of the item showing information (for example, an item name) that uniquely identifies the item, a photograph of an item tag with an item name on it and the like. With use of such photographic data, a user can obtain the item-related information simply by taking a photograph of the item, which enhances the user-friendliness of the purchase support system 1.

The request transmitting unit 13 is a means of generating a request signal that contains the input store ID (store-related information) and photographic data (item-related information) and transmitting the request signal to the mediation server 30.

The presented information receiving unit 14 is a means of receiving presented information that is transmitted from the mediation server 30 in response to transmission of the request signal. The presented information is a list of presented items extracted by the mediation server 30 on the basis of the photograph of the item transmitted by the request transmitting unit 13, and it is information indicating the item name, store selling the item, purchase cost, time to acquisition, and points obtained by purchase for each of the items. The presented item is an item which is the same as or similar to the item in the photograph. Further, the "similar item" is an item which is different from the item in the photograph but is similar in appearance or the same in category or attribute as the item in the photograph. Generation of the presented information in the mediation server 30 is described later. The presented information receiving unit 14 outputs the received presented information to the display unit 15.

The display unit 15 is a means of displaying the presented information input from the presented information receiving unit 14 on a monitor of the mobile terminal 10. Fig. 3 shows an example of display of the presented information. Fig. 3 tells that there are three stores (stores A, B and C) that sell a presented item S and that the purchase cost (total price), time to acquisition, and points are different among the stores. In this manner, a plurality of item-selling stores are extracted for one presented item in some cases. The underline for each store name indicates a hyperlink. The purchase cost is the amount including shipping and remuneration charges, as appropriate, in addition to the price (base price) of the item.

The store C in Fig. 3 is a visited store, because the time to acquisition is "immediate" indicating that the item S can be received at the store. When a user purchases the item S in the store C, the user can select payment by cash at the store or payment with a credit card through an online payment site (site A) provided by the payment server 50. The hyperlink for the store C is to access the online payment site.

On the other hand, the stores A and B are stores different from the visited store. The hyperlinks for the stores A and B are to access an online shopping site (site provided by the shopping server 40) of the selected store, and the user can go through a purchase procedure of the presented item in the site. The "time to acquisition" for the stores A and B indicates the time until the item S is shipped from the store and arrives at the user's end. Note that a store different from the visited store may be a store that exists only as a store (virtual store) on an online shopping site or a store that exists also as a real store.

Although only the information about one presented item (item S) is shown in Fig. 3, the presented information may include information about a plurality of presented items, and, in this case, another presented item is displayed by scrolling or page turning. The presented information may include both information about the same item as an item photographed by a user and information about the similar item to the item, and a user interface (for example, a switch button) for selectively displaying the two types of information may be placed on a screen.

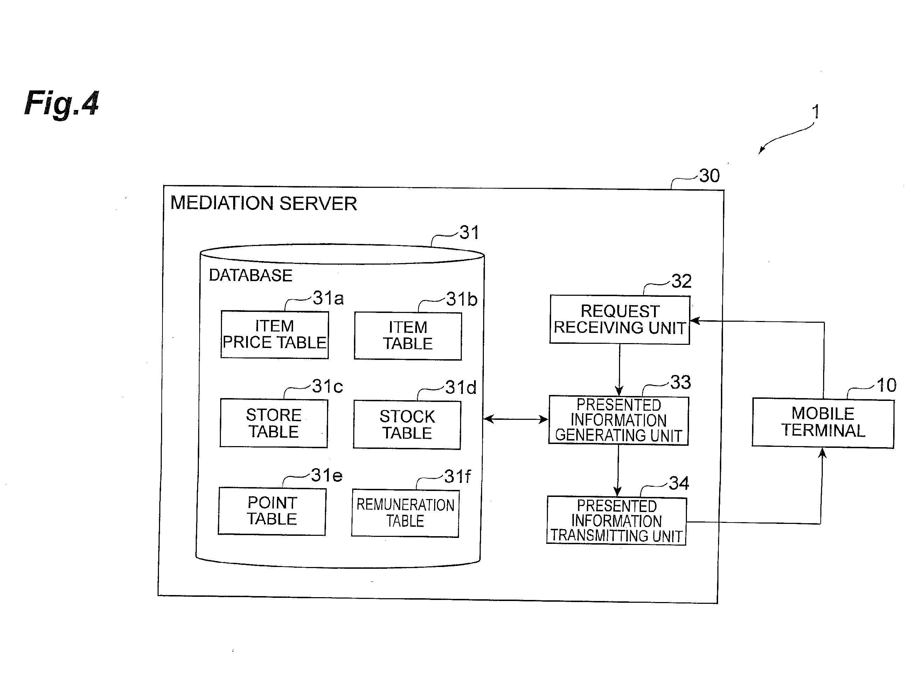

The mediation server 30 is described next. Referring to Fig. 4, the mediation server 30 includes a database (storage means) 31, a request receiving unit (related information receiving means) 32, a presented information generating unit (generating means) 33, and a presented information transmitting unit (presented information transmitting means) 34 as functional elements.

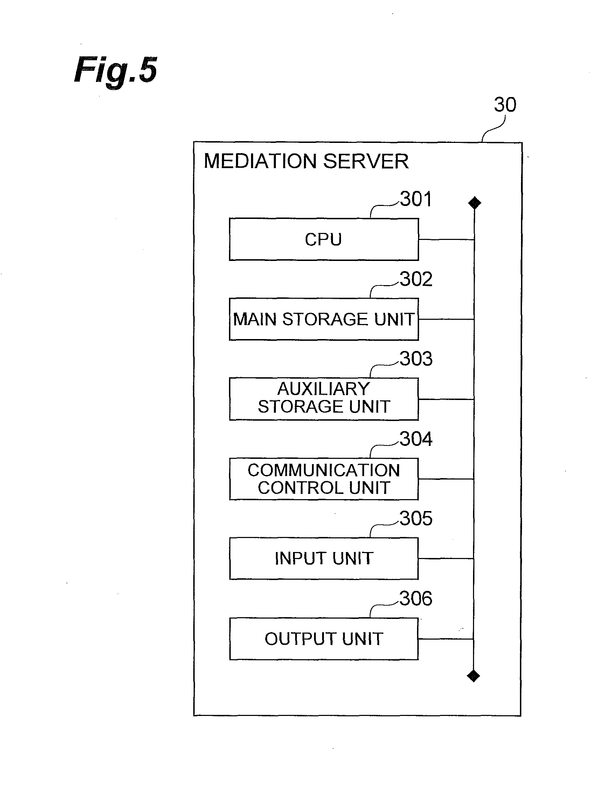

Referring to Fig. 5, the mediation server 30 is composed of a CPU 301 that executes an operating system, an application program and the like, a main storage unit 302 such as ROM and RAM, an auxiliary storage unit 303 such as a hard disk, a communication control unit 304 such as a network card, an input unit 305 such as a keyboard and a mouse, and an output unit 306 such as a monitor. The functions shown in Fig. 4 are implemented by reading given software onto the CPU 301 or the main storage unit 302, causing the communication control unit 304, the input unit 305, the output unit 306 and the like to operate under control of the CPU 301, and performing data reading and writing in the main storage unit 302 or the auxiliary storage unit 303. Data and database required for the processing is stored in the main storage unit 302 or the auxiliary storage unit 303.

Note that, although the mediation server 30 is a single computer in the example of in Fig. 5, the functions of the mediation server 30 may be distributed among a plurality of computers. For example, the database 31 may be implemented in another server, separately from the mediation server 30.

Referring back to Fig. 4, the database 31 is a means of storing various kinds of data required for processing in the mediation server 30, and it includes an item price table 31a, an item table 31 b, a store table 31 c, a stock table 31 d, a point table 31 e, and a remuneration table 31 f.

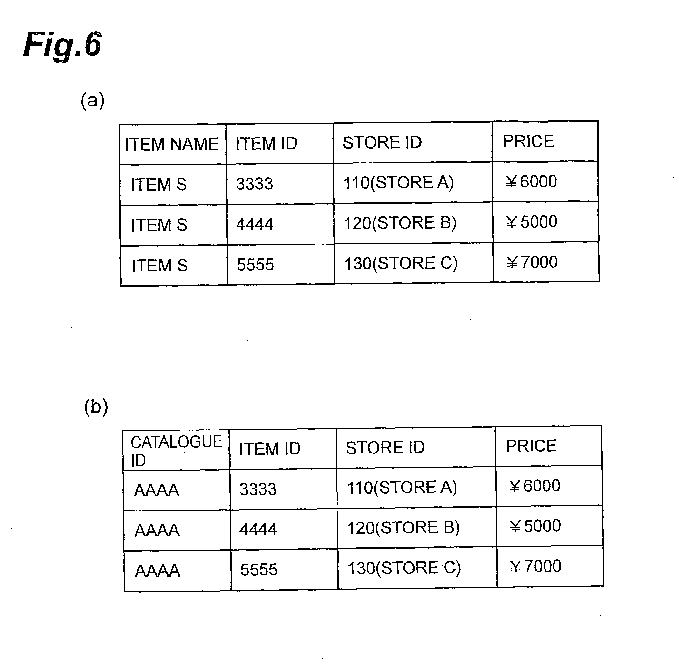

The item price table 31a stores price data in which the item name or catalogue ID that uniquely identifies an item, the item ID that is uniquely assigned to the item by a store selling the item, the store ID of the store selling the item, and the base price of the item in the store selling the item are associated with one another. Thus, the price data is data indicating the prices of an item in stores selling the item. For example, assuming that the store IDs of the stores A, B and C selling the item S shown in Fig. 3 are "110", "120" and 130", respectively, and the item IDs of the item S in the stores A, B and C are "3333", "4444" and 5555", respectively, the price data corresponding to the presented information shown in Fig. 3 is represented as shown in Fig. 6(a). If the catalogue ID "AAAA" is assigned to the item S, the price data may be generated using the catalogue ID instead of the item name as shown in Fig. 6(b). Note that the catalogue ID may be the model number of an item. The total price in Fig. 3 and the base price in Fig. 6 are different because there is a case where the purchase cost presented to a user includes the amount different from the base price as described later.

The item table 31b stores item data indicating basic information of items. The item data is made up of the item name or catalogue ID that uniquely identifies an item and entries indicating item attributes (item name, category, manufacturer name, size, color etc.). Note that the varieties of item attributes indicated by the item data may be set arbitrarily.

The store table 31c stores store data indicating basic information of a store. The store data is made up of the store ID and entries indicating store attributes (store name, group name, address or map information, telephone number, URL for online shopping, delivery company, delivery time needed for each region etc.), and it is uniquely identified by the store ID. Note that the varieties of store attributes indicated by the store data may be set arbitrarily.

The stock table 31d stores stock data in which the item name or catalogue ID, the item ID, the store ID of a store selling the item, and the stock quantity of the item in the store selling the item are associated with one another. Thus, the stock data is data indicating the number of items remaining in each store. The stock data is updated based on item stock data transmitted from each of the store servers 20 or the shopping server 40 at specified timing.

The point table 31e stores point data indicating how many points are awarded to a user in each store at the time of item purchase. The structure of the point data is determined according to the way points are awarded. For example, when points are set on the item-by-item basis, the point data is uniquely identified by the item name or catalogue ID, and, when points are set on the store-by-store basis, the point data is uniquely identified by the store ID. Further, when points of each item is set on the basis of the base price in each store, the point data is uniquely identified by the item name or catalogue ID, the item ID and the store ID. The structure of the point data is not limited to those examples and may be set arbitrarily.

The remuneration table 31f stores remuneration data indicating the amount of remuneration paid from one store to another store when a user purchases in one store an item corresponding to the item recognized in another store (real store). Because the real store in which the displayed item is photographed by a user is considered to contribute to the sales of the one store, it is preferred to distribute a part of the sales to the real store. The distributed amount is defined as remuneration in this embodiment. For a user, the remuneration is a commission to the real store which is incurred by actually checking the item in the visited store.

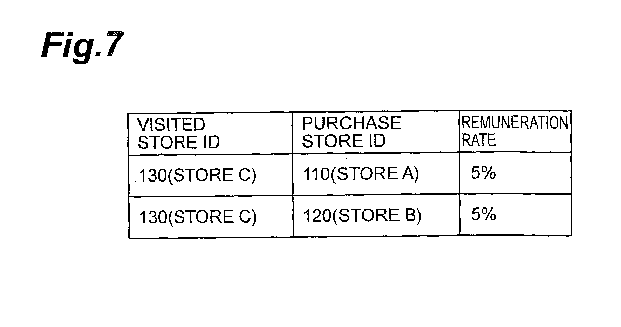

The remuneration data may have different structures depending on the method of determining the remuneration amount. Fig. 7 shows an example of the structure of the remuneration data. The example of Fig. 7 shows that the remuneration rate that is applied to the base price is set according to a combination of a visited store and a purchase store. In this example, when a user purchases the item S that has been recognized in the store C from the store A, ¥300 (5% of ¥6000) is paid from the store A to the store C. Even when the remuneration is defined not by a specific amount but by a ratio to the base price, the remuneration data is still data indicating the remuneration amount.

The remuneration rate may be determined by an arbitrary method. In the example of Fig. 7, weights may be assigned to remuneration rates on the basis of attributes of a visited store or a purchase store. The attributes of a store may be the relationship between a visited store and a purchase store (for example, whether both stores are in the same group or not), the customer-attracting power or location conditions of a visited store (for example, whether the store is located in a busy area), the display cost of an item with the land prices or tenant fees for a visited store taken into account, the delivery distance or shipping costs from a purchase store to a delivery destination and the like. For example, when the both stores are in the same group or in cooperative relationships, the remuneration rate may be set lower (for example, 1%) than a standard value (for example, 5%), and when the both stores are in competitive relationships, the remuneration rate may be set higher (for example, 10%) than the standard value. In this manner, it is possible to ensure equitability between stores by setting an appropriate remuneration rate according to store attributes. Note that varieties of the store attributes based on which the remuneration rate is determined is not limited to the above examples.

As a different method from Fig. 7, the remuneration rate may be set based only on one of a visited store and a purchase store. In this case, the remuneration rate is uniquely identified by one store ID. Further, the remuneration rate or remuneration amount may be set based only on item attributes such as a price. In this case, the remuneration data is uniquely identified by the item name or catalogue ID.

Note that the structure of the database 31 and the structure of data of each table are not limited to the above-described examples, and the database may be designed by an arbitrary policy. For example, the price data and the stock data may be integrated.

The request receiving unit 32 is a means of receiving a request signal that contains a store ID and photographic data from the mobile terminal 10. The request receiving unit 32 outputs the received request signal to the presented information generating unit 33.

The presented information generating unit 33 is a means of generating presented information based on the request signal input from the request receiving unit 32.

The presented information generating unit 33 extracts the store ID and the photographic data from the input signal. The presented information generating unit 33 then executes image recognition on the photographic data and thereby estimates an object (item shape and color, item name, catalogue ID etc.), then compares the estimation result with the item data in the item table 31b to identify the item indicated by the photographic data. For this process, the related art as disclosed in the above-described Non Patent Literatures 1 and 2 may be used. The item (presented item) identified in this process may be the item in the photograph (the same item as the object) or an item similar to the item in shape or color (the similar item to the object). Further, there is a case where a plurality of items are identified from the photographic data, and, in this case, both of the same item and the similar item may be included. In any case, the presented information generating unit 33 specifies the item name or catalogue ID of one or more presented items by such a process.

Then, the presented information generating unit 33 refers to the item price table 31a, the item table 31b, the store table 31c and the stock table 31d using the extracted store ID (the store ID of the visited store) and the specified item name or catalogue ID as the search criteria. The presented information generating unit 33 then generates a list of presented item data in which the presented item, the store having a stock of the item, the delivery time ("time to acquisition" in Fig. 3) and the purchase cost (=base price + shipping charge) in the store excluding remuneration are associated with one another. Note that, however, because there is no shipping charge in the case of purchasing the item in the visited store, when the store ID is the ID of the visited store, the purchase cost = the base price. The shipping charge and the delivery time can be found based on information about the locations of the visited store and the item-selling store, and the delivery company and delivery time needed of the item-selling store. Note that, when there are a plurality of delivery methods for one item and one store and there are a plurality of patterns of shipping charges and delivery time, the presented information generating unit 33 may generate a plurality of presented item data for one item and one store.

After that, the presented information generating unit 33 refers to the remuneration table 31f using the store IDs of the item-selling store and the visited store as the search criteria for each of the presented item data and adds the remuneration amount obtained by multiplying the base price by the extracted remuneration rate to the purchase cost. The final purchase cost ("total price" in Fig. 3) is thereby obtained. Note that, however, because there is no remuneration in the case of purchasing the item in the visited store, for the presented item data in which the item-selling store is the visited store, the addition of the remuneration amount is not made.

As described above, in the case of purchasing an item in a visited store, the base price is the purchase cost, and, in the case of purchasing an item in a store different from a visited store, the amount including the shipping charge and the remuneration amount to the visited store in addition to the base price is the purchase cost. The example shown in Figs. 3, 6 and 7 means that the purchase cost in each store is calculated as follows when presenting information of the presented item S to a user who has visited the store C and photographed the item.
Store A: base price (¥6000)+ shipping charge (¥500) + remuneration (¥300) = ¥6,800
Store B: base price (¥5000)+ shipping charge (¥1000) + remuneration (¥250) = ¥6,250
Store C: base price (¥7000)

Then, the presented information generating unit 33 refers to the point table 31e for each of the presented item data and adds information about points to be displayed in a remarks column of Fig. 3 to the presented item data.

The presented information generating unit 33 outputs a set of presented item data generated in the above procedure as the presented information to the presented information transmitting unit 34.

The presented information transmitting unit 34 is a means of transmitting the presented information input from the presented information generating unit 33 to the mobile terminal 10. The presented information is thereby displayed on the mobile terminal 10 as described above.

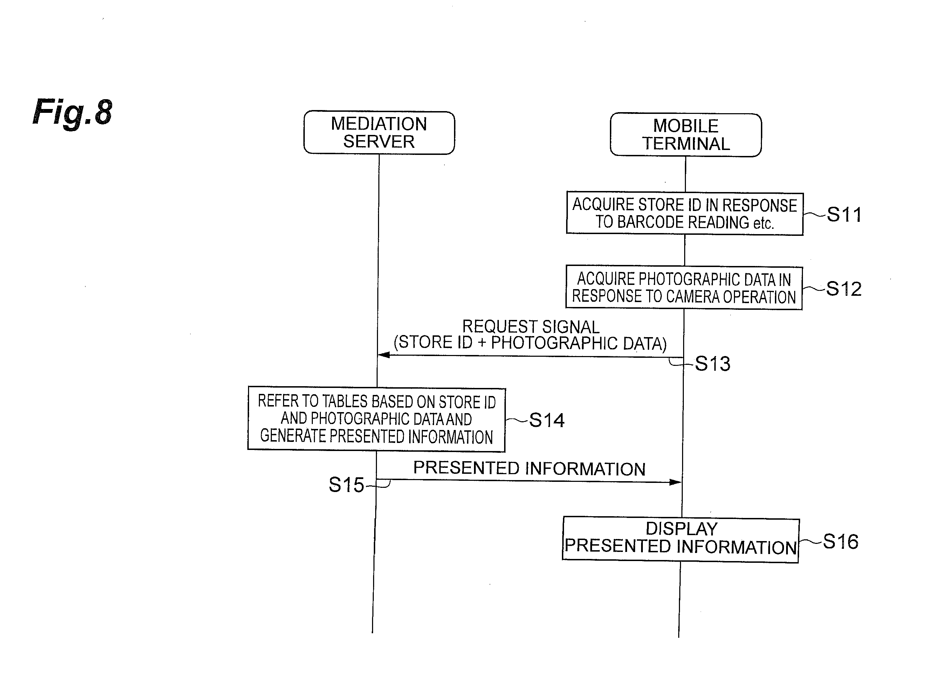

Hereinafter, an operation of the purchase support system 1 shown in Fig. 1 is described and further a purchase support method according to this embodiment is described with reference to Fig. 8.

Assume that a user who has visited a certain store becomes interested in an item displayed in the store and runs an application program for acquiring presented information which is installed in the mobile terminal 10 in order to find where and how much to purchase the same or similar item. After that, according to the guidance of the program, the user reads a barcode presented in the store and takes a photograph of the item which the user found interesting.

At this time, in the mobile terminal 10, the store-related information acquiring unit 11 acquires the store ID from the read barcode (Step S11), and the item-related information acquiring unit 12 acquires the photographic data of the item (Step S12). Then, the request transmitting unit 13 generates a request signal containing the store ID and the photographic data and transmits the signal to the mediation server 30 (Step S13).

In the mediation server 30, the request receiving unit 32 receives the request signal (related information receiving step). Then, the presented information generating unit 33 generates presented information by reference to the database 31 based on the store ID and the photographic data extracted from the request signal (Step S14, generation step). Specifically, the presented information generating unit 33 estimates the item in the photograph by the image recognition process and, by reference to the item table 31b, specifies the item name or catalogue ID of the estimated item (presented item). Then, the presented information generating unit 33 generates presented information by reference to each of the tables in the database 31 based on the store ID and the item name or catalogue ID. As described above, the generation process includes calculation of the remuneration amount and the purchase cost, retrieval of points and the like. After the presented information is generated, the presented information transmitting unit 34 transmits the information to the mobile terminal 10 (Step S 15, presented information transmitting step).

Given such a process, in the mobile terminal 10, the presented information receiving unit 14 receives the presented information, and the display unit 15 displays the information on the monitor as in the example of Fig. 3 (Step S16). A user can thereby check the stores selling the same or similar item to the item which the user found interesting in the visited store and the purchase cost at each store and then determine which item to purchase in which store. Because additional information such as time to acquisition (delivery time) and points are also presented, the user can make a consideration about purchasing the item from various angles. This means that the purchase support system 1 can support the user's item purchase in an elaborate manner.

When the user who has made consideration about the presented information purchases the presented item in the visited store, the user can obtain the item immediately by paying cash or making a credit card payment through an online payment site accessed from a hyperlink on the screen and presenting the result to a sales associate in the store.

On the other hand, when a user purchases the presented item in a store different from the visited store, the user can obtain the item from the different store by making a purchase procedure through an online shopping site accessed from a hyperlink on the screen. However, the user needs to wait until the item arrives home. In this case, the visited store can obtain a predetermined amount of remuneration from the different store. In the example of Fig. 3, the store C can obtain ¥300 when the user purchases the presented item S from the store A, and obtain ¥250 when the user purchases the presented item S from the store B.

Note that the data about the remuneration incurred is stored in a specified server (the mediation server 30 or another server which is not shown). Then, the obtained remuneration amount is summed for each store by batch processing executed at specified timing, and the remuneration is given to each store based on the summation result.

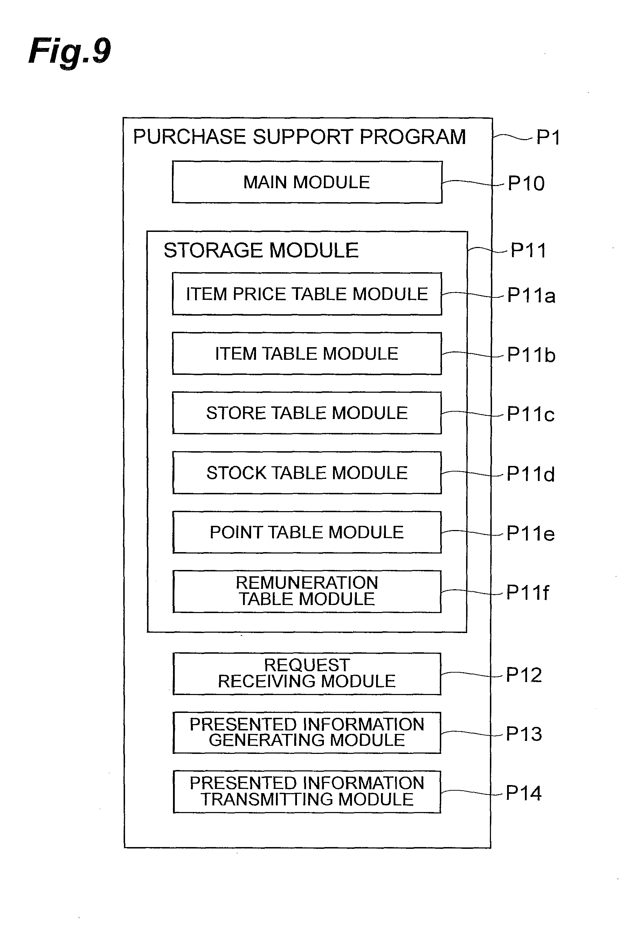

Hereinafter, a purchase support program for causing a computer to function as the mediation server 30 is described with reference to Fig. 9.

The purchase support program P1 includes a main module P10, a storage module P11, a request receiving module P12, a presented information generating module P13, and a presented information transmitting module P14. The storage module P11 includes an item price table module P11a, an item table module P11b, a store table module P11c, a stock table module P11d, a point table module P11e, and a remuneration table module P11f.

The main module P10 is a part that exercises control over the respective functions of the mediation server 30 shown in Fig. 4. The functions implemented by executing the storage module P11, the request receiving module P12, the presented information generating module P13 and the presented information transmitting module P 14 are equal to the functions of the database 31, the request receiving unit 32, the presented information generating unit 33 and the presented information transmitting unit 34 described above, respectively. The functions implemented by executing the item price table module P11a, the item table module P11b, the store table module P11c, the stock table module P11d, the point table module P11e and the remuneration table module P11f are equal to the functions of the item price table 31a, the item table 31b, the store table 31 c, the stock table 31d, the point table 31e and the remuneration table 31f described above, respectively.

The purchase support program P1 is provided in the form of being stored in a recording medium such as CD-ROM, DVD or ROM or semiconductor memory, for example. Further, the purchase support program P1 may be provided through a communication network as a computer data signal superimposed onto a carrier wave.

As described above, according to the present embodiment, presented information about stores selling a presented item corresponding to an item recognized by a user (photographed item) and purchase costs is generated based on photographic data and a store ID received from the mobile terminal 10 and transmitted to the mobile terminal 10. At the time of generating the presented information, when a store selling the item is not a visited store, the remuneration amount to be paid from that store to the visited store is included in the purchase cost. Accordingly, when a user purchases the item recognized in the visited store in another store, the remuneration for the purchase is paid to the visited store, so that the profit is distributed not only to the purchase store but also to the visited store.

From the standpoint of a store different from the visited store (for example, a store which a user cannot readily visit because of being located in a distant place or the like), there arises a chance that a user purchases an item of its own store through the network by the purchase support system 1. This leads to increased sales through the network. On the other hand, from the standpoint of a visited store, even if an item of its own store is not purchased by a visitor, it is possible to receive the profit on the basis of the sales of another store as remuneration as a result that the visitor uses the purchase support system 1. Thus, it is possible to distribute profits in an equitable manner between a visited store and another store that has gained sales resulting from a photograph taken in the visited store. Further, by realizing such profit distribution, it is expected that the user's immoral behavior that takes a photograph of an item of a real store without permission will diminish.

Further, in this embodiment, when a store selling an item is a visited store, a link for performing a purchase procedure of a presented item in the visited store through a predetermined credit payment site is embedded in the presented information corresponding to the visited store. In this manner, by providing a means for a credit card payment through a network at the time of purchasing a presented item in a visited store, it is possible to increase opportunities to purchase the item in the visited store. For example, a user can purchase the item in the visited store even when a credit card is not available in the visited store or when a user does not want to provide credit card information to the visited store, which is convenient for the user. Further, this allows the visited store to sell the item without missing an opportunity.

Hereinbefore, the present invention has been described in detail with respect to the embodiment thereof. However, the present invention is not limited to the above-described embodiment. Various changes and modifications may be made therein without departing from the scope of the invention.

Although the store-related information that is transmitted from the mobile terminal 10 to the mediation server 30 is a store ID in the above-described embodiment, another kind of information may be used as the store-related information. For example, position information (latitude and longitude) indicating the position of the mobile terminal 10 may be used as the store-related information as described earlier. In this case, the presented information generating unit 33 of the mediation server 30 compares the position indicated by the position information with store data (specifically, the address or map information of the store) in the store table 31 c and specifies the store where the mobile terminal 10 is located as the visited store. Then, the presented information generating unit 33 generates the presented information as described above using the store ID of the specified visited store. In this manner, in the case of specifying the visited store based on the position information of the mobile terminal 10, the visited store can be specified without need to prepare information for identifying the store embedded in a two-dimensional barcode or IC tag in the store.

Although the item-related information that is transmitted from the mobile terminal 10 to the mediation server 30 is photographic data in the above-described embodiment, another kind of information may be used as the item-related information. For example, the mobile terminal 10 may be configured to read the item name or catalogue ID embedded in an item tag on the terminal side and transmit the read information to the mediation server 30. In this case, the presented information generating unit 33 of the mediation server 30 can generate the presented information using the item name or catalogue ID as it is.

Although price data in the item price table 31a indicates the base price of an item and the presented information generating unit 33 adds the remuneration amount to the base price in the above-described embodiment, the remuneration amount may be included into the purchase cost by another method. Specifically, the price data may include one or more presented price instead of the base price. The presented price is a price presented to a user (potential purchaser) for a specific item by a specific store, and there are at least two types: the presented price not including the remuneration amount (the price offered when a user visits a store) and the presented price including the remuneration amount (the price offered online to a user who has visited another store).

When the store ID of a store selling an item matches the visited store ID, the presented information generating unit 33 may read the presented price not including the remuneration amount as the presented price corresponding to the selling store ID. On the other hand, when the store ID of a store selling an item is different from the visited store ID, the presented information generating unit 33 may read the presented price including the remuneration amount as the presented price corresponding to the selling store ID.

As described above, how to calculate the remuneration amount in the mediation server 30 or how to store the remuneration amount in advance may be determined arbitrarily. In any case, when a store selling an item is different from a visited store, the remuneration amount to be paid from the selling store to the visited store is included in the purchase cost of the item presented to a user.

### Reference Signs List

1...Purchase support system, 10...Mobile terminal, 11...Store-related information acquiring unit (acquiring means), 12...Item-related information acquiring unit (acquiring means), 13...Request transmitting unit (related information transmitting means), 14...Presented information receiving unit (presented information receiving means), 15...Display unit, 20...Store server, 30...Mediation server (purchase support server), 31...Database (storage means), 31 a...Item price table, 31 b...Item table, 31c... Store table, 31d... Stock table, 31 e...Point table, 31f...Remuneration table, 32...Request receiving unit (related information receiving means), 33...Presented information generating unit (generating means), 34...Presented information transmitting unit (presented information transmitting means), 40...Shopping server, 50...Payment server, P1...Purchase support program, P10...Main module, P11...Storage module, P11a...Item price table module , P11b...Item table module, P11c...Store table module, P11d...Stock table module, P11e...Point table module, P11f...Remuneration table module, P 12...Request receiving module, P13...Presented information generating module, P 14...Presented information transmitting module

## Claims

1. A purchase support server comprising:
a related information receiving means for receiving store-related information for identifying a store visited by a user as a visited store and item-related information for identifying an item recognized by the user in the store from a mobile terminal of the user;
a storage means for storing item data related to an item, store data related to a store, price data indicating a price of an item in a store selling the item, and remuneration data indicating a remuneration amount to be paid from one store to another store when a user purchases in the one store an item corresponding to the item recognized in the another store;
a generating means for generating presented information indicating a purchase cost when purchasing a presented item corresponding to the item-related information from a store selling the item by reference to the storage means based on the item-related information and the store-related information received by the related information receiving means, the purchase cost including the remuneration amount to be paid from the selling store to the visited store when the selling store is different from the visited store; and
a presented information transmitting means for transmitting the presented information generated by the generating means to the mobile terminal.

2. The purchase support server according to Claim 1, wherein
the store-related information is store IDentification information identifying a store, read by the mobile terminal from a barcode or an IC tag placed in the visited store.

3. The purchase support server according to Claim 1, wherein
the store-related information is position information indicating a position of the mobile terminal, acquired by a position acquiring means of the mobile terminal, and
the generating means specifies a store located in the position indicated by the position information as the visited store based on the position information and the store data.

4. The purchase support server according to any one of Claims 1 to 3, wherein
the item-related information is photographic data of an item, and
the generating means executes image recognition on the photographic data and specifies an item indicated by the photographic data based on a result of the image recognition and the item data.

5. The purchase support server according to any one of Claims 1 to 4, wherein
weights are assigned to the remuneration amount based on attributes of the one store or attributes of the another store.

6. The purchase support server according to any one of Claims 1 to 5, wherein
information about time to acquire the presented item is included in the presented information, and
when the selling store is different from the visited store, the purchase cost further includes a shipping charge of the presented item.

7. The purchase support server according to any one of Claims 1 to 6, wherein
when the selling store is the visited store, a link for performing a purchase procedure of the presented item in the visited store through a predetermined credit payment site is embedded in the presented information corresponding to the visited store.

8. A purchase support system including a mobile terminal of a user, and a purchase support server capable of communication with the terminal,
the mobile terminal comprising:
an acquiring means for acquiring store-related information for identifying a store visited by a user as a visited store and item-related information for identifying an item recognized by the user in the store;
a related information transmitting means for transmitting the store-related information and the item-related information acquired by the acquiring means to the purchase support server; and
a presented information receiving means for receiving presented information transmitted from the purchase support server in response to the store-related information and the item-related information transmitted by the related information transmitting means, and
the purchase support server comprising:
a related information receiving means for receiving the store-related information and the item-related information transmitted by the related information transmitting means;
a storage means for storing item data related to an item, store data related to a store, price data indicating a price of an item in a store selling the item, and remuneration data indicating a remuneration amount to be paid from one store to another store when a user purchases in the one store an item corresponding to the item recognized in the another store;
a generating means for generating the presented information indicating a purchase cost when purchasing a presented item corresponding to the item-related information from a store selling the item by reference to the storage means based on the item-related information and the store-related information received by the related information receiving means, the purchase cost including the remuneration amount to be paid from the selling store to the visited store when the selling store is different from the visited store; and
a presented information transmitting means for transmitting the presented information generated by the generating means to the mobile terminal.

9. A purchase support method executed by a purchase support server, the purchase support server including a storage means for storing item data related to an item, store data related to a store, price data indicating a price of an item in a store selling the item, and remuneration data indicating a remuneration amount to be paid from one store to another store when a user purchases in the one store an item corresponding to the item recognized in the another store, the method comprising:
a related information receiving step of receiving store-related information for identifying a store visited by a user as a visited store and item-related information for identifying an item recognized by the user in the store from a mobile terminal of the user;
a generating step of generating presented information indicating a purchase cost when purchasing a presented item corresponding to the item-related information from a store selling the item by reference to the storage means based on the item-related information and the store-related information received in the related information receiving step, the purchase cost including the remuneration amount to be paid from the selling store to the visited store when the selling store is different from the visited store; and
a presented information transmitting step of transmitting the presented information generated in the generating step to the mobile terminal.

10. A purchase support program causing a computer to implement:
a related information receiving function that receives store-related information for identifying a store visited by a user as a visited store and item-related information for identifying an item recognized by the user in the store from a mobile terminal of the user;
a storage means function that stores item data related to an item, store data related to a store, price data indicating a price of an item in a store selling the item, and remuneration data indicating a remuneration amount to be paid from one store to another store when a user purchases in the one store an item corresponding to the item recognized in the another store;
a generating function that generates presented information indicating a purchase cost when purchasing a presented item corresponding to the item-related information from a store selling the item by reference to the storage means based on the item-related information and the store-related information received by the related information receiving function, the purchase cost including the remuneration amount to be paid from the selling store to the visited store when the selling store is different from the visited store; and
a presented information transmitting function that transmits the presented information generated by the generating function to the mobile terminal.

11. A computer-readable recording medium storing a purchase support program causing a computer to implement:
a related information receiving function that receives store-related information for identifying a store visited by a user as a visited store and item-related information for identifying an item recognized by the user in the store from a mobile terminal of the user;
a storage means function that stores item data related to an item, store data related to a store, price data indicating a price of an item in a store selling the item, and remuneration data indicating a remuneration amount to be paid from one store to another store when a user purchases in the one store an item corresponding to the item recognized in the another store;
a generating function that generates presented information indicating a purchase cost when purchasing a presented item corresponding to the item-related information from a store selling the item by reference to the storage means based on the item-related information and the store-related information received by the related information receiving function, the purchase cost including the remuneration amount to be paid from the selling store to the visited store when the selling store is different from the visited store; and
a presented information transmitting function that transmits the presented information generated by the generating function to the mobile terminal.

## Amended claims

### Amended claims under Art. 19.1 PCT

**1.** A purchase support server comprising:
a related information receiving means for receiving store-related information for identifying a store visited by a user as a visited store and item-related information for identifying an item recognized by the user in the store from a mobile terminal of the user;
a storage means for storing item data related to an item, store data related to a store, price data indicating a price of an item in a store selling the item, and remuneration data indicating a remuneration amount to be paid from one store to another store when a user purchases in the one store an item corresponding to the item recognized in the another store;
a generating means for generating presented information indicating a purchase cost when purchasing a presented item corresponding to the item-related information from a store selling the item by reference to the storage means based on the item-related information and the store-related information received by the related information receiving means, and
a presented information transmitting means for transmitting the presented information generated by the generating means to the mobile terminal
wherein, when the selling store is different from the visited store, the generating means adds the remuneration amount to be paid from the selling store to the visited store to the purchase cost and thereby generates presented information indicating the purchase cost being a price different from a price of the presented item in the selling store.

**2.** The purchase support server according to Claim 1, wherein the store-related information is store IDentification information identifying a store, read by the mobile terminal from a barcode or an IC tag placed in the visited store.

**3.** The purchase support server according to Claim 1, wherein
the store-related information is position information indicating a position of the mobile terminal, acquired by a position acquiring means of the mobile terminal, and
the generating means specifies a store located in the position indicated by the position information as the visited store based on the position information and the store data.

**4.** The purchase support server according to any one of Claims 1 to 3, wherein
the item-related information is photographic data of an item, and
the generating means executes image recognition on the photographic data and specifies an item indicated by the photographic data based on a result of the image recognition and the item data.

**5.** The purchase support server according to any one of Claims 1 to 4, wherein
weights are assigned to the remuneration amount based on attributes of the one store or attributes of the another store.

**6.** The purchase support server according to any one of Claims 1 to 5, wherein
information about time to acquire the presented item is included in the presented information, and
when the selling store is different from the visited store, the purchase cost further includes a shipping charge of the presented item.

**7.** The purchase support server according to any one of Claims 1 to 6, wherein
when the selling store is the visited store, a link for performing a purchase procedure of the presented item in the visited store through a predetermined credit payment site is embedded in the presented information corresponding to the visited store.

**8.** A purchase support system including a mobile terminal of a user, and a purchase support server capable of communication with the terminal,
the mobile terminal comprising:
an acquiring means for acquiring store-related information for identifying a store visited by a user as a visited store and item-related information for identifying an item recognized by the user in the store;
a related information transmitting means for transmitting the store-related information and the item-related information acquired by the acquiring means to the purchase support server; and
a presented information receiving means for receiving presented information transmitted from the purchase support server in response to the store-related information and the item-related information transmitted by the related information transmitting means, and
the purchase support server comprising:
a related information receiving means for receiving the store-related information and the item-related information transmitted by the related information transmitting means;
a storage means for storing item data related to an item, store data related to a store, price data indicating a price of an item in a store selling the item, and remuneration data indicating a remuneration amount to be paid from one store to another store when a user purchases in the one store an item corresponding to the item recognized in the another store;
a generating means for generating the presented information indicating a purchase cost when purchasing a presented item corresponding to the item-related information from a store selling the item by reference to the storage means based on the item-related information and the store-related information received by the related information receiving means; and
a presented information transmitting means for transmitting the presented information generated by the generating means to the mobile terminal
wherein, when the selling store is different from the visited store, the generating means adds the remuneration amount to be paid from the selling store to the visited store to the purchase cost and thereby generates presented information indicating the purchase cost being a price different from a price of the presented item in the selling store.

**9.** A purchase support method executed by a purchase support server, the purchase support server including a storage means for storing item data related to an item, store data related to a store, price data indicating a price of an item in a store selling the item, and remuneration data indicating a remuneration amount to be paid from one store to another store when a user purchases in the one store an item corresponding to the item recognized in the another store, the method comprising:
a related information receiving step of receiving store-related information for identifying a store visited by a user as a visited store and item-related information for identifying an item recognized by the user in the store from a mobile terminal of the user;
a generating step of generating presented information indicating a purchase cost when purchasing a presented item corresponding to the item-related information from a store selling the item by reference to the storage means based on the item-related information and the store-related information received in the related information receiving step and
a presented information transmitting step of transmitting the presented information generated in the generating step to the mobile terminal
wherein, the generating step includes a step of adding, when the selling store is different from the visited store, the remuneration amount to be paid from the selling store to the visited store to the purchase cost and thereby generating presented information indicating the purchase cost being a price different from a price of the presented item in the selling store.

**10.** A purchase support program causing a computer to implement:
a related information receiving function that receives store-related information for identifying a store visited by a user as a visited store and item-related information for identifying an item recognized by the user in the store from a mobile terminal of the user;
a storage means function that stores item data related to an item, store data related to a store, price data indicating a price of an item in a store selling the item, and remuneration data indicating a remuneration amount to be paid from one store to another store when a user purchases in the one store an item corresponding to the item recognized in the another store;
a generating function that generates presented information indicating a purchase cost when purchasing a presented item corresponding to the item-related information from a store selling the item by reference to the storage means based on the item-related information and the store-related information received by the related information receiving function and
a presented information transmitting function that transmits the presented information generated by the generating function to the mobile terminal,
wherein, when the selling store is different from the visited store, the generating function adds the remuneration amount to be paid from the selling store to the visited store to the purchase cost and thereby generates presented information indicating the purchase cost being a price different from a price of the presented item in the selling store.

**11.** A computer-readable recording medium storing a purchase support program causing a computer to implement:
a related information receiving function that receives store-related information for identifying a store visited by a user as a visited store and item-related information for identifying an item recognized by the user in the store from a mobile terminal of the user;
a storage means function that stores item data related to an item, store data related to a store, price data indicating a price of an item in a store selling the item, and remuneration data indicating a remuneration amount to be paid from one store to another store when a user purchases in the one store an item corresponding to the item recognized in the another store;
a generating function that generates presented information indicating a purchase cost when purchasing a presented item corresponding to the item-related information from a store selling the item by reference to the storage means based on the item-related information and the store-related information received by the related information receiving function; and
a presented information transmitting function that transmits the presented information generated by the generating function to the mobile terminal,
wherein, when the selling store is different from the visited store, the generating function adds the remuneration amount to be paid from the selling store to the visited store to the purchase cost and thereby generates presented information indicating the purchase cost being a price different from a price of the presented item in the selling store.

Statement under Art. 19.1 PCT
Claim 1 has been amended to clarify the feature that "when the selling store is different from the visited store, the generating means adds the remuneration amount to be paid from the selling store to the visited store to the purchase cost and thereby generates presented information indicating the purchase cost being a price different from a price of the presented item in the selling store".

With this feature included, the invention as defined by the amended Claim 1 has an advantage that it is possible to distribute profits in an equitable manner to both of the visited store and the selling store.

On the other hand, although the cited document 1 (JP 2010-511921 A) contains a description that an introduction reward is calculated by the system upon detection of purchase from a search list by a user (Paragraph [0351]), it contains no disclosure or suggestion that the purchase cost indicated by the presented information and the price of the presented item in the selling store are different from each other.

Accordingly, the invention as defined by the amended Claim 1 has novelty and inventive step.

It should be noted that, because the above feature is not described or suggested also in the cited document 2 (JP 2003-122757 A), the invention as defined by the amended Claim 1 still has novelty and inventive step even if the document 2 is taken into consideration.

Claims 2 to 7 refer to Claim 1. Further, the invention as defined by the amended Claims 8 to 11 has the same feature as described above. Accordingly, the invention as defined by Claims 2 to 11 also has novelty and inventive step.
